# EUROPÄISCHE PATENTSCHRIFT

(11) **EP 0 582 914 B1**
(45) Veröffentlichungstag und Bekanntmachung des Hinweises auf die Patenterteilung: **06.12.1995**
(21) Anmeldenummer: 93112237.8
(22) Anmeldetag: 30.07.1993
(51) Int. Cl.: C01B 7/07

(54) **Verfahren zur Gewinnung von reiner, konzentrierter Salzsäure aus Abwasser**
Process for the formation of pure concentrated hydrochloric acid from sewage
Procédé d'obtention d'acide chlorhydrique pur concentré à partir d'eaux usées

(30) Priorität: 10.08.1992 DE 4226381
(43) Veröffentlichungstag der Anmeldung: 16.02.1994
(73) Patentinhaber: BDAG Balcke-Dürr Aktiengesellschaft, D-40882 Ratingen (DE)
(72) Erfinder: Chafik, Efat, Dr., D-50668 Köln (DE); Bittig, Roland, D-40885 Ratingen (DE); Exner, Rodica, D-40878 Ratingen (DE)
(74) Vertreter: Stenger, Watzke & Ring Patentanwälte

(56) Entgegenhaltungen:
- EP-A- 0 425 922
- EP-A- 0 506 050
- GB-A- 1 379 793
- US-A- 3 140 916
- US-A- 4 154 804

## Beschreibung

Die Erfindung betrifft ein Verfahren zur Gewinnung von reiner, konzentrierter Salzsäure aus Abwasser, vorzugsweise aus der Rauchgaswäsche von Müllverbrennungsanlagen, durch Destillation des Abwassers in mehreren Destillationskolonnen, einschließlich einer Kolonne zur Entfernung von Flußsäure und Bromsäure aus der azeotropischen und noch mit schwersiedenden Komponenten beladenen Salzsäure.

Es gibt verschiedene Verfahren, bei denen es wünschenswert wäre, aus den anfallenden Abwässern reine Salzsäure zurückzugewinnen. Beispielsweise bei der Rauchgaswäsche von Müllverbrennungsanlagen entsteht eine verdünnte Salzsäure, die jedoch mit zahlreichen Verunreinigungen, wie Fluor, Brom, Kohlenwasserstoffen und Schwermetallen belastet ist. Bei einer wirtschaftlich sinnvollen Aufarbeitung derartiger Abwässer müßte die Salzsäure auf ca. 30 Gew.% aufkonzentriert, die Verunreinigungen auf das technisch erreichbare Mindestmaß reduziert und auch sonstige wertvolle Stoffe in reiner Form zurückgewonnen werden, wobei eine Optimierung von Investions- und Betriebsmittelkosten des Aufarbeitungsverfahrens angestrebt werden sollte.

Die vorliegende Erfindung befaßt sich mit der Herstellung von konzentrierter Salzsäure bei gleichzeitiger Entfernung von Flußsäure und Bromsäure, und zwar durch thermische Trennung in einer Destillationskolonne.

Die Entfernung von Flußsäure aus Salzsäure durch die Reaktion

2HF + CaCl2 ---> 2HCl + CaF2

ist bekannt. Hierbei kann Kalziumchlorid in wässriger Lösung oder in wasserfreier, kristalliner Form verwendet werden.

Aus der US-PS 3 140 916 ist es weiterhin bekannt, HF an eine 50 %tige CaCl2-Lösung zu binden mit anschließender Fällung des Kalziumfluorids. Hierbei hat sich herausgestellt, daß diese Methode nur anwendbar ist, wenn ein Fluor-Restgehalt von 300 ppm toleriert werden kann. Die Ursache hierfür liegt an der relativ hohen Löslichkeit von Kalziumfluorid in Salzsäure. Sie liegt über 2 g/l. Bei dem heutigen Stand der Technik werden jedoch Restgehalte von Fluor von 10 ppm in der Produktsäure gefordert, so daß die aus der US-PS 3 140 916 bekannte Methode praktisch nicht anwendbar ist.

Die aus der DE-OS 22 29 571 bekannte Reinigung des Salzsäure-Anhydrids durch chemische Anbindung der Flußsäure an wasserfreies Kalziumchlorid kann zwar die erforderliche Reinheit erbingen, verursacht jedoch bei einem hohen Fluoranteil einen sehr hohen Bedarf an Kalziumchlorid. Aus diesem Grunde ist das aus der DE-OS 22 29 571 bekannte Verfahren nur als Notbehelf für außerplanmäßige Betriebsstörungen einsetzbar.

Ausgehend von dem eingangs beschriebenen, als bekannt vorausgesetzten Verfahren liegt der Erfindung die **Aufgabe** zugrunde, ein derartiges Verfahren zur Gewinnung von reiner, konzentrierter Salzsäure aus Abwasser derart weiterzubilden, daß die Reduzierung von Flußsäure und Bromsäure bis in den Bereich von 10 ppm bei gleichzeitiger Minimierung des Energieaufwandes möglich ist.

Die **Lösung** dieser Aufgabenstellung durch die Erfindung ist dadurch gekennzeichnet, daß der aus einer zusätzlichen HF/HBr-Kolonne ausströmende Kopfstrom in mindestens zwei Teilströme aufgeteilt wird, von denen ein Teilstrom der nachfolgenden Kolonne und ein Teilstrom unmittelbar dem dieser Kolonne nachgeschalteten Absorber zugeführt wird.

Durch die Rektifikation der auf azeotropische Zusammensetzung vorkonzentrierten Salzsäure in der HF/HBr-Kolonne ergibt sich eine Reduzierung von Fluor- und Brom-Ionen bis in den Bereich von 10 ppm. Da der azeotrope Salzsäure-Strom am Kopf der HF/HBr-Kolonne mindestens in zwei Teilströme aufgespalten wird, verringert sich die Zulaufmenge zur nachfolgenden Kolonne (Strippkolonne) und damit auch die dort einzuspeisende Menge an CaCl2-Lösung. Als weitere Folge ergibt sich hierdurch die Verringerung des Heizdampfbedarfes sowohl der Strippkolonne als auch des Verdampfers, welcher zur Eindickung des Sumpfstromes aus dieser Kolonne eingesetzt wird. Trotz der zusätzlichen Anordnung der HF/HBr-Kolonne ergibt sich somit eine Verringerung des Heizdampfverbrauches. Der geringere Verbrauch an Heizdampf in den einzelnen Apparaten hat aber auch einen niedrigeren Kühl-wasserbedarf zur Folge, so daß insgesamt der Energieverbrauch des erfindungsgemäßen Verfahrens herabgesetzt wird.

Ein weiterer Vorteil des erfindungsgemäßen Verfahrens ist die Reduzierung des benötigten vollentsalzten Wassers auf ein Minimum, da derartiges VE-Wasser nur für die Einstellung der Produktkonzentration erforderlich ist.

Durch die Aufspaltung des azeotropen Salzsäure-Stromes am Kopf der HF/HBr-Kolonne lassen sich schließlich die Abmessungen der nachfolgenden Kolonne und des zugehörigen Absorbers kleinhalten; ebenso wird die erforderliche Fläche sämtlicher Wärmetauscher und die des Verdampfers kleiner.

Ein weiterer Vorteil des erfindungsgemäßen Verfahrens liegt schließlich in der Verbesserung der Wirtschaftlichkeit des gesamten Verfahrens durch die Möglichkeit zur Erzeugung von Brom- und Fluorverbindungen.

Gemäß einem weiteren Merkmal der Erfindung wird der aufsteigende Dampfstrom am Kopf der HF/HBr-Kolonne in einen Teilstrom, der zum Kopfkondensator strömt, und einen zweiten Teilstrom, welcher zur HCl-Strippkolonne fließt, aufgeteilt. Der flüssige Ablauf aus dem Kondensator wird gemäß einer bevorzugten Weiterbildung der Erfindung wiederum aufgeteilt in einen Teilstrom zum Absorber hinter der HCl-Strippkolonne und einen zweiten Teilstrom, der als Rücklauf zum Kopf der HF/HBr-Kolonne strömt.

Bei einer alternativen Weiterbildung wird der gesamte aufsteigende Gesamtstrom am Kopf der HF/HBr-Kolonne erst kondensiert und anschließend in drei Teilströme aufgespalten, die zur HCl-Strippkolonne, zum Absorber hinter der HCl-Strippkolonne und zum Rücklauf am Kopf der HF/HBr-Kolonne geleitet werden.

Der Zulauf zur HF/HBr-Kolonne kann aus flüssiger oder dampfförmiger azeotropischer Salzsäure bestehen.

Die Sumpfflüssigkeit der HF/HBr-Kolonne wird entweder kontinuierlich oder diskontinuierlich zur weiteren Verarbeitung, nämlich zur Rückgewinnung von Wertstoffen abgezogen.

Gemäß weiteren Merkmalen der Erfindung können die Brom- und Fluorverbindungen aus der Sumpfflüssigkeit der HF/HBr-Kolonne getrennt oder gemeinsam gewonnen werden.

Zur Minimierung des Heizdampfverbrauches ist es schließlich möglich, die dampfförmigen Ströme von einer Kolonne zur anderen bei abnehmenden Betriebsdruck überzuleiten. Die HF/HBr-Kolonne sowie die nachgeschaltete Hochkonzentrierungskolonne können unter Vakuum oder unter Normaldruck betrieben werden.

Ein weiterer Vorteil des erfindungsgemäßen Verfahrens, nämlich die Verhinderung einer Einschleusung von Silikon-Verbindungen läßt sich schließlich dadurch erzielen, daß der Neutralisitationsschritt, welcher durch Zugabe von Ca(OH)2 zum Sumpf der HF/HBr-Kolonne erfolgt, außerhalb des CaCl2-Kreislaufes liegt.

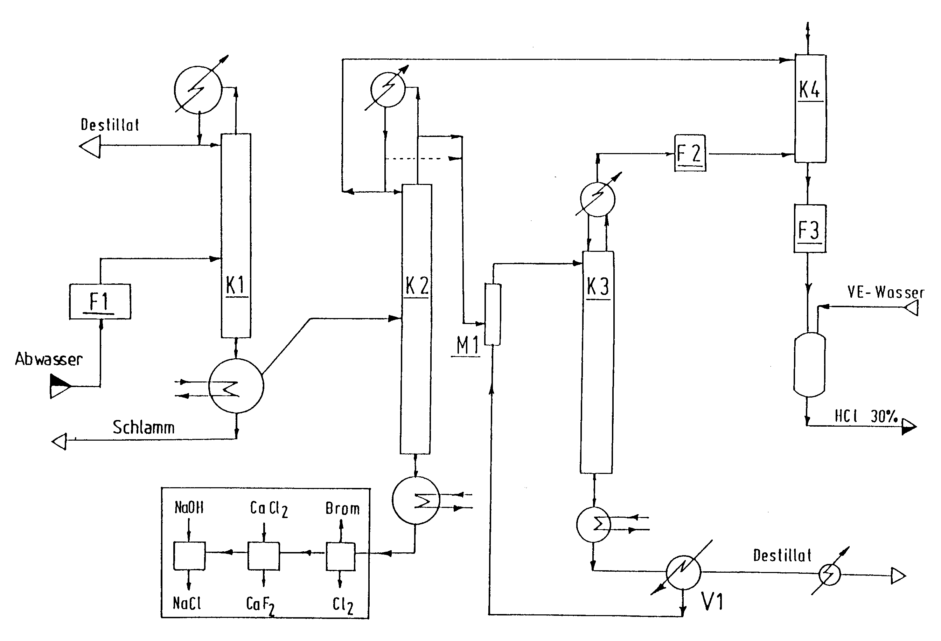

Die Zeichnung zeigt ein Schema des erfindungsgemäßen Verfahrens.

Das beispielsweise aus der Rauchgaswäsche einer Müllverbrennungsanlage kommende Abwasser wird in einem Filter F1 von Schwermetallen befreit und in einer Vorkonzentrierungskolonne K1 auf ca. 20 % Salzsäure aufkonzentriert. Der am Fuß der Vorkonzentrierungskolonne K1 erzeugte Salzsäure-Dampf mit azeotroper Zusammensetzung wird abgeleitet und einer HF/HBr-Kolonne K2 zugeführt. Vorteilhafterweise soll in dieser HF/HBr-Kolonne leichter Unterdruck von beispielsweise 0,9 bar herrschen.

Der am Kopf der HF/HBr-Kolonne K2 aufsteigende azeotrope Salzsäuredampf beinhaltet nur noch Spuren von HF und HBr. Rektifizierungsversuche haben nämlich gezeigt, daß durch Rektifikation der fluorhaltigen, azeotropen Salzsäure in der HF/HBr-Kolonne ein Kopfprodukt mit weniger als 10 ppm HF bzw. HBr gewonnen werden kann.

Dieser Dampfstrom wird in mindestens zwei Teilströme aufgespalten. Mit ausgezogenen Linien ist in der Zeichnung dargestellt, daß ein Teil des aufsteigenden Salzsäuredampfes direkt der nachfolgenden HCl-Strippkolonne K3 zugeführt wird, während der zweite Teilstrom kondensiert wird. Dieses Kondensat wird wiederum in zwei Kondensatströme aufgeteilt, von denen ein Teilstrom zurück in die HF/HBr-Kolonne K2 und der andere Teilstrom unmittelbar zu einem Absorber K4 geführt wird, welcher der HCl-Strippkolonne K3 nachgeschaltet ist. Hierdurch ergibt sich der Vorteil, daß für die Versorgung des Absorbers K4 kein Bedarf an vollentsalztem Wasser besteht.

Alternativ zu der voranstehend beschriebenen Aufteilung kann der gesamte aufsteigende Dampfstrom am Kopf der HF/HBr-Kolonne K2 zuerst kondensiert und anschließend in drei Teilströme aufgespalten werden, von denen einer in der Zeichnung gestrichelt dargestellt ist. Dieser gestrichelt dargestellte Teilstrom führt einen Teil des kondensierten Kopfstromes der HF/HBr-Kolonne K2 zur nachgeschalteten HCl-Strippkolonne K3. Bei den beiden weiteren Teilströmen handelt es sich um die mit ausgezogenen Linien dargestellten Ströme, nämlich einen Rücklaufstrom zum Kopf der HF/HBr-Kolonne K2 und einen Teilstrom unmittelbar zum Absorber K4 hinter der HCl-Strippkolonne K3.

Bevor der Teilstrom der azeotropen Salzsäure aus der HF/HBr-Kolonne K2 der HCl-Strippkolonne K3 zugeführt wird, wird diesem Teilstrom in einem Mischer M1 eine 50 %tige Lösung von CaCl2 beigemischt. Diese Lösung wird durch Eindickung des Sumpfstromes aus der Kolonne K1 in einem Verdampfer V1 erzeugt. Die Kolonne K3 wird als reine Abtriebssäule, d.h. als Stripper betrieben. Die aus dem Dephlegmator entweichenden Dämpfe beinhalten über 99 % HCl und nur geringfügige HF- (und Brom-) Anteile. Die diesem Strom noch enthaltenen Spuren von HF werden an einen festen CaCl2-Filter F2 gebunden.

Im Absorber K4 wird der 99 %tige Salzsäuredampf aus der Kolonne K3 vom azeotropen HCl-Strom aus der HF/HBr-Kolonne K2 absorbiert. Beide Ströme sind hierbei so aufeinander abgestimmt, beispielsweise 1 zu 7, daß die Säurekonzentration am Austritt des Absorbers K4 etwas höher als die gewünschten 30 % liegt. Durch Zugabe von Zusatzwasser kann eine exakte Einstellung der Produktsäurekonzentration vorgenommen werden. Die noch vorhandenen organischen Verunreinigungen werden aus diesem Strom durch einen Aktivkohlefilter F3 entfernt.

Im Sumpf der HF/HBr-Kolonne K2 reichern sich Fluß- und Bromsäure an. Da beide Stoffe in sehr kleinen Mengen vorliegen, geht nahezu die gesamte Zulaufmenge über den Kolonnenkopf zur weiteren Verarbeitung über. Daher ist auch eine diskontinuierliche Ausschleusung des Sumpfstromes möglich. Dies sollte erst dann erfolgen, wenn Flußsäure- und Bromsäure-Anteile im Sumpf über ca. 10.000 ppm liegen.

Durch die chemische Behandlung des Sumpfes aus der HF/HBr-Kolonne K2 mit beispielsweise Chlor und anschließendem Kalziumchlorid oder Aluminiumchlorid können Brom und Fluorverbindungen in reiner Form gewonnen werden. Die Mutterlauge kann anschließend mit NaOH oder Ca(OH)2 neutralisiert werden.

Das voranstehend beschriebene Verfahren zeigt, daß es möglich ist, Abwasser mit beispielsweise 10 % Salzsäureanteil und je 1.000 ppm HF bzw. HBr zunächst auf die azeotropische Zusammensetzung vorzukonzentrieren, um es anschließend von HF und HBr zu befreien. In einer Vorkonzentrierungskolonne scheiden Wasser und sonstige leichtersiedende Bestandteile aus. Fluß- und Bromsäure sowie azeotropische Salzsäure bleiben zur weiteren Verarbeitung im Sumpf der Kolonne.

### Bezugszeichenliste:

- F1: Filter
- F2: CaCl-Filter
- F3: Aktivkohlefilter
- K1: Vorkonzentrierungskolonne
- K2: HF/HBr-Kolonne
- K3: HCl-Strippkolonne
- K4: Absorber
- M1: Mischer
- V1: Verdampfer

## Patentansprüche

1. Verfahren zur Gewinnung von reiner, konzentrierter Salzsäure aus Abwasser, beispielsweise aus der Rauchgaswäsche von Müllverbrennungsanlagen, durch Destillation des Abwassers in mehreren Destillationskolonnen, einschließlich einer Kolonne zur Entfernung von Flußsäure und Bromsäure aus der azeotropischen und noch mit schwersiedenen Komponenten beladenen Salzsäure,
**dadurch gekennzeichnet,**
daß der aus einer zusätzlichen HF/HBr-Kolonne (K2) ausströmende Kopfstrom in mindestens zwei Teilströme aufgeteilt wird, von denen ein Teilstrom der nachfolgenden HCl-Strippkolonne (K3) und ein Teilstrom unmittelbar dem dieser HCl-Strippkolonne (K3) nachgeschalteten Absorber (K4) zugeführt wird.

2. Verfahren nach Anspruch 1, dadurch gekennzeichnet, daß der aufsteigende Dampfstrom am Kopf der HF/HBr-Kolonne (K2) in einen Teilstrom, der zum Kopfkondensator strömt, und einen zweiten Teilstrom, welcher zur HCl-Strippkolonne (K3) fließt, aufgeteilt wird.

3. Verfahren nach Anspruch 1 und 2, dadurch gekennzeichnet, daß der flüssige Ablauf aus dem Kondensator in einen Teilstrom zum Absorber (K4) hinter der HCl-Strippkolonne (K3) und einen zweiten Teilstrom, der als Rücklauf zum Kopf der HF/HBr-Kolonne (K2) strömt, aufgeteilt wird.

4. Verfahren nach Anspruch 1, dadurch gekennzeichnet, daß der gesamte aufsteigende Dampfstrom am Kopf der HF/HBr-Kolonne (K2) erst kondensiert und anschließend in drei Teilströme aufgespalten wird, von denen einer zur HCl-Strippkolonne (K3), einer unmittelbar zum Absorber (K4) hinter der HCl-Strippkolonne (K3) und einer als Rücklauf dem Kopf der HF/HBr-Kolonne (K2) zugeführt wird.

5. Verfahren nach mindestens einem der Ansprüche 1 bis 4, dadurch gekennzeichnet, daß der Zulauf zur HF/HBr-Kolonne (K2) aus flüssiger oder dampfförmiger azeotropischer Salzsäure besteht.

6. Verfahren nach mindestens einem der Ansprüche 1 bis 5, dadurch gekennzeichnet, daß die Sumpfflüssigkeit der HF/HBr-Kolonne (K2) kontinuierlich oder diskontinuierlich zur weiteren Verarbeitung, insbesondere zur Rückgewinnung von Wertstoffen abgezogen wird.

7. Verfahren nach Anspruch 6, dadurch gekennzeichnet, daß die Brom- und Fluorverbindungen aus der Sumpfflüssigkeit der HF/HBr-Kolonne (K2) getrennt oder gemeinsam gewonnen werden.

8. Verfahren nach mindestens einem der Ansprüche 1 bis 7, dadurch gekennzeichnet, daß die HF/HBr-Kolonne (K2) sowie die Hochkonzentrierungskolonne (K3) unter Vakuum oder Normaldruck betrieben werden.

## Claims

1. Process for producing pure, concentrated hydrochloric acid from wastewater, for example from the flue gas scrubbing of refuse incineration plants, by distillation of the wastewater in a plurality of distillation columns, including a column for removing hydrofluoric acid and hydrobromic acid from the azeotropic hydrochloric acid still laden with high-boiling components, characterized in that the overhead stream flowing from an additional HF/HBr column (K2) is divided into at least two part-streams, of which one part-stream is fed to the subsequent HCl-stripping column (K3) and one part-stream is fed directly to the absorber (K4) downstream of this HCl-stripping column (K3).

2. Process according to Claim 1, characterized in that the ascending vapour stream at the top of the HF/HBr column (K2) is divided into one part-stream which flows to the overhead condenser and a second part-stream which flows to the HCl-stripping column (K3).

3. Process according to Claim 1 and 2, characterized in that the liquid efflux from the condenser is divided into one part-stream to the absorber (K4) downstream of the HCl-stripping column (K3) and a second part-stream which flows as reflux to the top of the HF/HBr column (K2).

4. Process according to Claim 1, characterized in that the total ascending vapour stream at the top of the HF/HBr column (K2) is first condensed and then split into three part-streams, of which one is fed to the HCl-stripping column (K3), one is fed directly to the absorber (K4) downstream of the HCl-stripping column (K3) and one is fed as reflux to the top of the HF/HBr column (K2).

5. Process according to at least one of Claims 1 to 4, characterized in that the feed to the HF/HBr column (K2) comprises liquid or vaporous azeotropic hydrochloric acid.

6. Process according to at least one of Claims 1 to 5, characterized in that the bottoms liquid of the HF/HBr column (K2) is continuously or discontinuously taken off for further processing, in particular for recovery of valuable materials.

7. Process according to Claim 6, characterized in that the bromine compounds and fluorine compounds from the bottoms liquid of the HF/HBr column (K2) are recovered separately or together.

8. Process according to at least one of Claims 1 to 7, characterized in that the HF/HBr column (K2) and the high-concentration column (K3) are operated under vacuum or atmospheric pressure.

## Revendications

1. Procédé pour l'obtention d'acide chlorhydrique concentré pur à partir d'eaux résiduaires, par exemple à partir d'eaux d'épuration de gaz de fumée d'installations d'incinération d'ordures, par distillation de l'eau résiduaire dans plusieurs colonnes de distillation, y compris une colonne pour l'élimination de l'acide fluorhydrique et de l'acide bromhydrique à partir de l'acide chlorhydrique azéotrope et contenant encore des composants à haut point d'ébullition, caractérisé en ce que le courant de tête sortant d'une colonne HF/HBr supplémentaire (K2) est divisé en au moins deux courants partiels, dont un courant partiel est envoyé à la colonne d'extraction de HCl (K3) suivante et un courant partiel est envoyé directement à l'absorbeur (K4) disposé à la suite de cette colonne d'extraction de HCl (K3).

2. Procédé selon la revendication 1, caractérisé en ce que le courant de vapeur ascendant à la tête de colonne HF/HBr (K2) est divisé en un courant partiel qui se dirige vers le condenseur de tête, et un second courant partiel qui s'écoule vers la colonne d'extraction de HCl (K3).

3. Procédé selon les revendications 1 et 2, caractérisé en ce que le courant liquide sortant du condenseur est divisé en un courant partiel dirigé vers l'absorbeur (K4) en aval de la colonne d'extraction de HCl (K3) et un second courant partiel qui, en tant que courant de reflux, s'écoule vers la tête de la colonne HF/HBr (K2).

4. Procédé selon la revendication 1, caractérisé en ce que le courant de vapeur ascendant total à la tête de la colonne HF/HBr (K2) est d'abord condensé et ensuite divisé en trois courants partiels, dont un est envoyé à la colonne d'extraction de HCl (K3), un est envoyé directement à l'absorbeur (K4) en aval de la colonne d'extraction de HCl (K3) et un est envoyé, en tant que courant de reflux, à la tête de la colonne KF/HBr (K2).

5. Procédé selon au moins l'une des revendications 1 à 4, caractérisé en ce que le courant arrivant à la colonne HF/HBr (K2) consiste en acide chlorhydrique azéotrope gazeux ou liquide.

6. Procédé selon au moins l'une des revendications 1 à 5, caractérisé en ce que le liquide résiduel de la colonne HF/HBr (K2) est évacué en mode continu ou discontinu pour un traitement ultérieur, en particulier pour la récupération de matières premières.

7. Procédé selon la revendication 6, caractérisé en ce que les composés bromés et fluorés sont obtenus séparément ou ensemble à partir du liquide résiduel de la colonne HF/HBr (K2).

8. Procédé selon au moins l'une des revendications 1 à 7, caractérisé en ce que l'on fait fonctionner sous vide ou sous la pression normale la colonne HF/HBr (K2) ainsi que la colonne de forte concentration (K3).
